# EUROPEAN PATENT SPECIFICATION

(11) **EP 1 983 772 B1**
(45) Date of publication and mention of the grant of the patent: **01.08.2018**
(21) Application number: 07706480.6
(22) Date of filing: 10.01.2007
(51) Int. Cl.: H04W 24/02, H04L 29/06, H04W 12/06, H04W 36/00, H04W 92/20

(54) **COMMUNICATION SYSTEM AND INFORMATION MANAGEMENT METHOD**
KOMMUNIKATIONSSYSTEM UND INFORMATIONSVERWALTUNGSVERFAHREN
SYSTÈME DE COMMUNICATION ET MÉTHODE DE GESTION DES INFORMATIONS

(30) Priority: 18.01.2006 JP 2006009850
(43) Date of publication of application: 22.10.2008
(73) Proprietor: NEC Corporation, Minato-ku Tokyo 108-8001 (JP)
(72) Inventor: KUBOTA, Mitsuhiro, Tokyo 108-8001 (JP); KATO, Hidenori, Tokyo 108-8001 (JP)
(74) Representative: Glawe, Delfs, Moll
(86) International application number: PCT/JP2007/050133
(87) International publication number: WO 2007/083541

(56) References cited:
- JP-A- 2004 260 445
- JP-A- 2004 266 331
- JP-A- 2004 304 394
- JP-A- 2004 533 790
- US-A1- 2002 089 951
- US-A1- 2005 148 368
- US-A1- 2005 272 428
- '3GPP TR25.813 v0.1.0' THE 3RD GENERATION PARTNERSHIP PROJECT, [Online] 15 November 2005, XP003015806 Retrieved from the Internet: <URL:http://www.3gpp.org/ftp/Specs/archive/ 25_series/25.813/25813-010.zip>

## Description

### TECHNICAL FIELD

The present invention relates to a communication system and an information management method suitably applicable to a radio network formed of an integrative radio base station integrating a radio communication function and a radio control function. As an example of a communication system to which the present invention is suitably applied, there may be mentioned a radio access network (RAN) formed of an integrative radio base station that integrates the functions of a radio base station and a radio control device used in a third generation mobile communication system or a radio network formed of an integrative access point in which a radio control function is integrated into an access point in a wireless LAN system.

### BACKGROUND ART

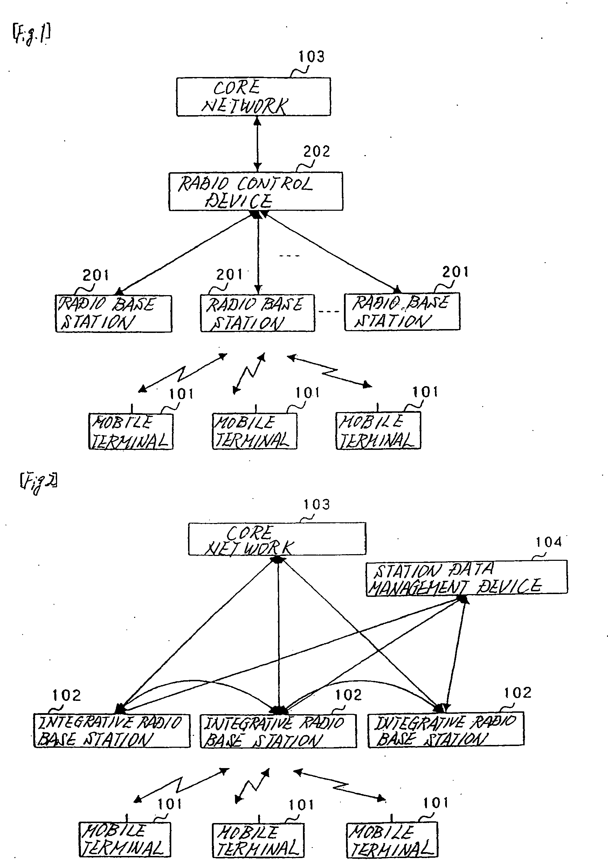

A third generation network using a wideband code division multiple access (W-CDMA) system has been presently provided in a mobile communication system. As illustrated in Fig. 1, the third generation mobile communication system includes radio base stations 201 each performing radio communication with mobile terminals 101 in a cell managed by itself and radio network controller (RNC) 202 for managing radio base stations 201. Radio base stations 201 are hierarchically connected to radio network controller 202 to form a radio access network (RAN) enabling mobile terminals 101 to be connected to core network 103. Radio control device 202 holds the station data of each radio base station 201, such data being information required for operation.

The configuration of the RAN used in the third generation mobile communication system is disclosed in, for example, Japanese Patent Laid-Open No. 10-322767.

In a next generation mobile communication system succeeding the third generation mobile communication system, there has been studied the installation of an integrative radio base station which integrates the functions of a radio base station and a radio control device illustrated in Fig. 1. In this case, the radio control device is eliminated, so that each integrative radio base station needs to hold the station data required for the operation including information on the cell managed by itself (or, self cell information) and information on the cells managed by other integrative radio base stations adjacent thereto (or, adjacent cell information).

However, the RAN formed only of integrative radio base stations has a problem in that the number of integrative radio base stations has increased to an extreme degree which complicates the task of managing the station data is held by each integrative radio base station, which increases the work load.

For example, if an integrative radio base station is added, the station data need to be registered in the added integrative radio base station. Since the handover process of a mobile terminal needs the adjacent cell information, the adjacent cell information need to be registered in each integrative radio base station. Furthermore, if an integrative radio base station is added, if an installed integrative radio base station is separated from the RAN or if the station data held by any integrative radio base station are changed, the station data of peripheral integrative radio base stations having the station data of the integrative radio base station as the adjacent cell information also need to be changed. Document US2005/0148368 A1 relates to configuration and integration of iBSs (internet base stations) into a network using an iSM (internet service management). The configuration and integration of the iBSs is performed by defining configuration parameter settings, including parameters and lists of neighbouring base stations, that allow full interoperation of the iBSs and the existing base stations within the network, with regards to roaming and handover in particular.

### DISCLOSURE OF THE INVENTION

The invention is set out in the appended set of claims. The embodiments and/or examples of the following description which are not covered by the appended claims are considered as not being part of the present invention. The present invention has its object to provide a communication system and a information management method facilitating the management of station data held by each integrative radio base station in a communication system which is formed of an integrative radio base station integrating the functions of a radio base station and a radio control device and which is used in the third generation mobile communication system.

In the present invention, in order to achieve the above object, a station data management device for controlling station data for each integrative radio base station is provided on a communication system formed of integrative radio base stations. Such a configuration enables the station data management device to supply the station data required for the operation to be added to an integrative radio base station. Furthermore, the integrative radio base station can acquire information of adjacent cells required for the handover process of mobile terminals as required from the station data management device. For this reason, the task for registering the information of cells adjacent to each integrative radio base station is eliminated. Still furthermore, even if an integrative radio base station is added, even if an installed integrative radio base station is separated from a network or even if the station data held by any integrative radio base station are changed, the station data management device can notify each integrative radio base station of the contents of the changed station data. This eliminates the task of changing the station data of other integrative radio base stations that have the information of the cell, as an adjacent cell data, of an integrative radio base station whose station data are changed.

This substantially decreases the work load for registration and renewal of the station data of integrative radio base stations, thus facilitating the management of the station data held by the integrative radio base stations.

### BRIEF DESCRIPTION OF THE DRAWINGS

Fig. 1 is a block diagram illustrating the configuration of a communication system of related art;
Fig. 2 is a block diagram illustrating one example of the configuration of a communication system according to the present invention;
Fig. 3 is a block diagram illustrating one example of the configuration of an integrative radio base station illustrated in Fig. 2;
Fig. 4 is a block diagram illustrating one example of the configuration of a station data management device illustrated in Fig. 2;
Fig. 5 is a sequence chart illustrating steps for adding an integrative radio base station to the RAN illustrated in Fig. 2;
Fig. 6 is a sequence chart illustrating steps for acquiring the adjacent cell information by the integrative radio base station illustrated in Fig. 2;
Fig. 7 is a block diagram illustrating one example of the information table included in the integrative radio base station illustrated in Fig. 2;
Fig. 8 is a sequence chart illustrating steps for changing station data by the integrative radio base station illustrated in Fig. 2;
Fig. 9 is a schematic diagram illustrating one example of the information table included in the integrative radio base station illustrated in Fig. 2; and
Fig. 10 is a sequence chart illustrating steps for notification of adjacent cell information by the integrative radio base station of the second embodiment.

### BEST MODE FOR CARRYING OUT THE INVENTION

The present invention is described below with reference to the drawings.

The present invention provides a station data management device for controlling station data for each integrative radio base station on the RAN which is formed of integrative radio base stations integrating the functions of the radio base station and the radio control device and which is used in the third generation mobile communication system.

### (First Embodiment)

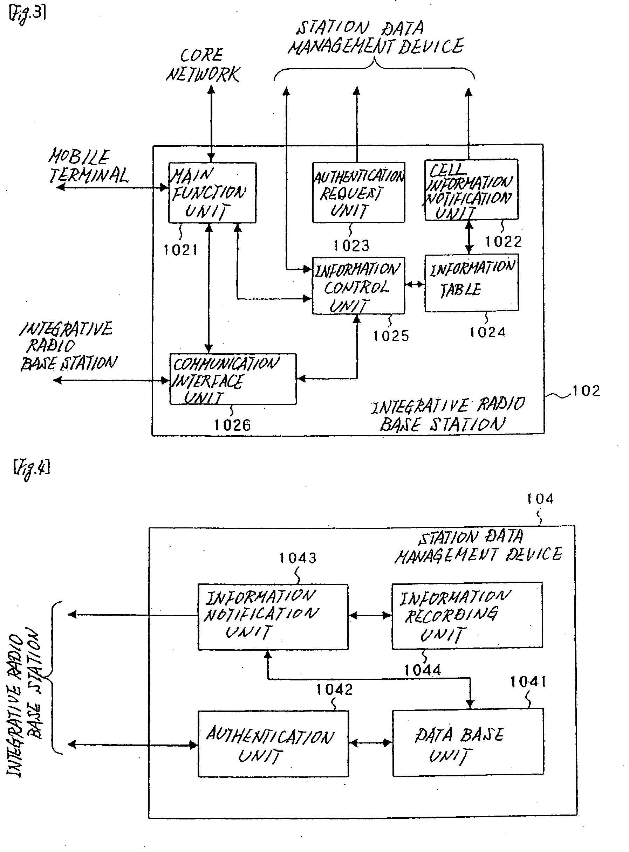

Fig. 2 is a block diagram illustrating one example of the configuration of a communication system according to the present invention. Fig. 3 is a block diagram illustrating one example of the configuration of an integrative radio base station illustrated in Fig. 2. Fig. 4 is a block diagram illustrating one example of the configuration of a station data management device illustrated in Fig. 2.

As illustrated in Fig. 2, the communication system of the present invention includes integrative radio base stations 102 and station data management device 104 for controlling the station data of each integrative radio base station 102. Each integrative radio base station 102 is connected to station data management device 104 and core network 103. Although Fig. 2 illustrates an example where the RAN is formed of three integrative radio base stations 102, the number of integrative radio base stations 102 is not limited to three. Furthermore, although Fig. 2 illustrates an example where integrative radio base station 102 is connected to three mobile terminals 101, the number of mobile terminals 101 connectable to integrative radio base station 102 is not limited, provided that mobile terminal 101 is in an area where it can be communicate with integrative radio base station 102.

Mobile terminal 101 transmits/receives user data and known control data to/from integrative radio base station 102. In addition, mobile terminal 101 measures reception quality for each integrative radio base station 102 capable of receiving user data and sends back information for identifying a cell (or, information for identifying integrative radio base station 102) and the measurement result of the reception quality corresponding thereto to integrative radio base station 102.

Core network 103 transmits/receives user data and known control data to/from integrative radio base station 102.

As illustrated in Fig. 3, integrative radio base station 102 includes main function unit 1021 which relays communications between mobile terminal 101 and core network 103 and which is equipped with the same function as the radio base station and the radio control device of the third generation mobile communication system, cell information notification unit 1022 for notifying station data management device 104 of information for identifying the cell managed by the integrative radio base station or the adjacent cell, authentication request unit 1023 for requesting station data management device 104 to perform an authentication when adding integrative radio base station 102 to the RAN, information table 1024 for holding the station data of the integrative radio base station including the cell information managed by the integrative radio base station and the adjacent cell information previously used, and information control unit 1025 which determines whether information table 1024 holds the cell information of destination at the time of the handover process of mobile terminal 101, if information table 1024 holds the cell information, which transfers the user data to integrative radio base stations 102 of the cell of the destination based on the cell information, and if information table 1024 does not hold the cell information, which acquires the corresponding cell information from the station data management device 104. Integrative radio base station 102 further includes communication interface unit 1026 for transmitting/receiving information to/from adjacent integrative radio base stations 102 and performs the handover process through mobile terminal 101 at the time of the movement of the cell through communication interface unit 1026.

Integrative radio base station 102 illustrated in Fig. 3 may realize each composing element using, for example, logic circuits or memories or may include a CPU (or a DSP) and a memory to realize the function of each composing element by the CPU (or the DSP) in accordance with a program stored in the memory. Alternatively, these may be combined.

When integrative radio base station 102 is initially connected to the RAN, authentication request unit 1023 requests station data management device 104 to perform an authentication. If integrative radio base station 102 is permitted to be connected to the RAN, station data required for operation is acquired from station data management device 104.

As described above, integrative radio base station 102 holds the information of a cell managed by an adjacent integrative radio base station 102 (or adjacent cell information) required for the handover process of mobile terminal 101 in information table 1024. The adjacent cell information is acquired from station data management device 104 as needed based on the measurement result of reception quality for each cell sent back from mobile terminal 101 in order to meet the change in the configuration of the RAN due to the addition or the separation of integrative radio base station from the RAN. However, the adjacent cell information held in each integrative radio base station 102 needs to be smaller in quantity than a self cell information used in integrative radio base station 102 itself. The adjacent cell information held in each integrative radio base station 102 is limited to the bare minimum information such as, for example, information for identifying a cell and destination address of integrative radio base station 102 managing adjacent cells.

As illustrated in Fig. 4, station data management device 104 includes data base unit 1041 for holding station data for each integrative radio base station 102, authentication unit 1042 for performing an authentication process in response to a request from integrative radio base station 102, information notification unit 1043 for supplying integrative radio base station 102 with station data required for the operation thereof and sending back cell information requested by the integrative radio base station to integrative radio base station 102 that is the source of the request if integrative radio base station 102 that is making a request for authentication is permitted to be connected to the RAN, and cell information recording unit 1044 for recording the adjacent cell information used in integrative radio base station 102.

As is the case with integrative radio base station 102, station data management device 104 illustrated in Fig. 4 may comprise each composing element using, for example, logic circuits or memories or may include a CPU (or a DSP) and a memory to realize the function of each composing element by using the CPU (or the DSP) in accordance with a program stored in the memory. Alternatively, these may be combined.

Station data management device 104 transmits/receives station data to/from each integrative radio base station 102 and manages data base unit 1041 so that the station data for each integrative radio base station 102 held by data base unit 1041 of station data management device 104 is equal to the station data held by information table 1024 of each integrative radio base station 102. For example, if integrative radio base station 102 is added, authentication unit 1042 determines whether integrative radio base station 102 is a normal device. If authentication unit 1042 permits integrative radio base station 102 to be connected to the RAN, information notification unit 1043 provides the station data required for operation for integrative radio base station 102. If integrative radio base station 102 is added to or separated from the RAN to change the configuration of the RAN, or if the station data of the installed integrative radio base station 102 is changed, the changed station data will be acquired from integrative radio base station 102 to renew data base unit 1041, and integrative radio base station 102 holding cell information which is to be changed as the adjacent cell information will be notified of the contents of change. Thus, station data management device 104 manages the station data held by each integrative radio base station 102 to readily enable the registration of station data of the added integrative radio base station 102 and renewal of station data held by the installed integrative radio base station 102 even if the configuration of the RAN is changed or even if the station data of integrative radio base station 102 is changed.

Incidentally, the configuration of core network 103 and mobile terminal 101 illustrated in Fig. 2 is well known to those skilled in the art and is not directly related to the present invention, so that detailed description thereof is omitted herein.

Main function unit 1021 of integrative radio base station 102 is one in which the functions of the radio base station and the radio control device of the third generation mobile communication system are integrated as described earlier, and the functions are well known to those skilled in the art and are not directly related with the present invention, so that detailed description thereof is omitted herein.

The operation of the communication system of the present embodiment is described below with reference to the drawings.

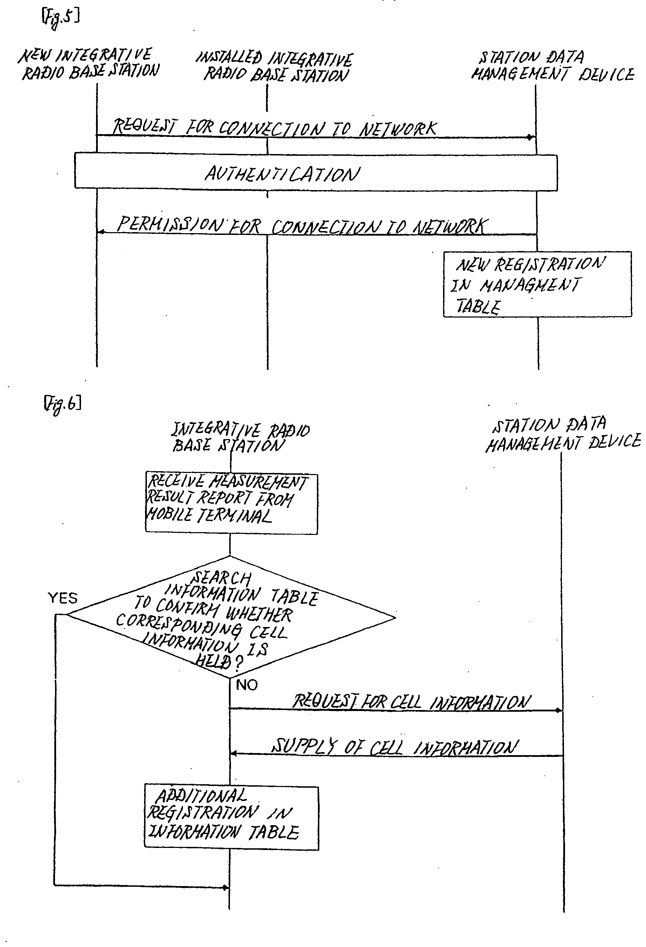

Steps for adding integrative radio base station 102 are described below with reference to Fig. 5.

Fig. 5 is a sequence chart illustrating steps for adding integrative radio base station to the RAN illustrated in Fig. 2.

As illustrated in Fig. 5, integrative radio base station 102 (a new integrative radio base station) added to the RAN first causes information control unit 1025 to transmit a request for connection to the RAN (or, a request for connection to a network) to station data management device 104. At this point, information control unit 1025 also transmits a pre-registered medium access control (MAC) address and IP address of the integrative radio base station to station data management device 104 with the request for connection to a network.
If the IP address is allocated to each integrative radio base station 102 by a known dynamic host configuration protocol (DHCP), the IP address does not need to be pre-registered in new integrative radio base station 102.

Station data management device 104 which has received the request for connection to a network from new integrative radio base station 102 causes authentication unit 1042 to ascertain, using the transmitted MAC and IP address, whether new integrative radio base station 102 is a normal device to determine to whether new integrative radio base station 102 is permitted to be connected to the RAN. At this point, new integrative radio base station 102 may acquire the MAC and the IP address from station data management device 104 to ascertain whether accessed station data management device 104 is a normal device.

If station data management device 104 determines that new integrative radio base station 102 is a normal device and permits it to be connected to the RAN, information notification unit 1043 transmits station data including a common parameter and an individual parameter to new integrative radio base station 102. The common parameter for the W-CDMA system includes radio resource control (RRC), radio link control (RLC), medium access control (MAC) and a parameter required for signal processing performed between devices, which can commonly be used. As individual parameters, there are available area information, various types of identification codes, parameters for setting a physical channel or a transport channel, initial transmission electric power, maximum transmission electric power and IP address.

Station data management device 104 transmits the station data to new integrative radio base station 102 which has requested connection to the RAN, and then registers the station data in data base unit 1041 together with the station data associated with added integrative radio base station 102.

Steps for acquiring adjacent cell information by integrative radio base station 102 are described below with reference to Fig. 6.

Fig. 6 is a sequence chart illustrating steps for acquiring adjacent cell information by integrative radio base station illustrated in Fig. 2.

As illustrated in Fig. 6, integrative radio base station 102 receives the measurement result of reception quality (or, a measurement result report) from mobile terminal 101, and then ascertains information for identifying a cell included in the measurement result report. Information control unit 1025 searches information table 1024 to determine whether information table 1024 holds cell information (adjacent cell information) related to the cell. If information table 1024 holds the corresponding adjacent cell information, the result is reported to main function unit 1021 and main function unit 1021 uses the information to perform a handover process of mobile terminal 101.

Mobile terminal 101 has a function to measure a pilot signal of integrative radio base station 102 concerning which integrative radio base station 102 does not request the measurement, and to report the result of the measurement to integrative radio base station 102.

If information table 1024 does not hold the corresponding adjacent cell information, information control unit 1025 requests station data management device 104 to transmit the corresponding cell information and cell information notification unit 1022 transmits information for identifying the cell to station data management device 104. At this point, information control unit 1025 may request station data management device 104 to transmit cell information on all adjacent cells that are not held based on the measurement result report received from mobile terminal 101, or may request station data management device 104 to transmit cell information only on the adjacent cell recognized as the destination based on the measurement result report from mobile terminal 101. If information control unit 1025 requests station data management device 104 to transmit only cell information of the adjacent cell recognized as the destination, the load that is processed by integrative radio base station 102 can be reduced. Whether information control unit 1025 requests station data management device 104 to transmit cell information on all adjacent cells that are not held, or only cell information on the adjacent cell recognized as the destination, may be changed according to instruction from station data management device 104.

Station data management device 104 which has received a request for the cell information from integrative radio base station 102, causes information notification unit 1043 to search data base unit 1041 according to information for identifying the cell, and sends back the corresponding cell information to integrative radio base station 102 which is the source of the request. The sent back cell information is registered in information recording unit 1044 as the adjacent cell information used by integrative radio base station 102 that has requested the cell information.

Integrative radio base station 102 which has received the cell information registers the information in information table 1024 as the adjacent cell information.

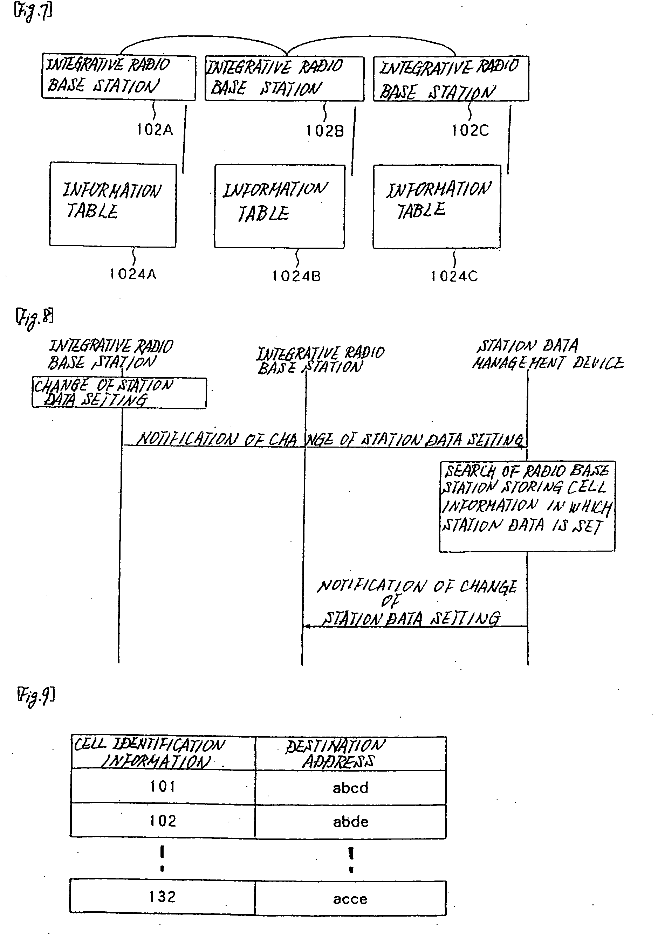

Steps for renewing an information table in integrative radio base station 102 are described below with reference to Fig. 7.

Fig. 7 is a block diagram illustrating one example of the information table of the integrative radio base station illustrated in Fig. 2.

The following is a description on the case where three integrative radio base stations 102A to 102C arranged adjacent to each other renew the contents of information tables 1024A, 1024B and 1024C included therein respectively. Information tables 1024A, 1024B and 1024C are regarded as storing cell information managed by integrative radio base stations 102A to 102C respectively. Specifically, information table 1024A stores the information of the cell managed by integrative radio base station 102A as its cell information and the information of the cell managed by integrative radio base stations 102B and 102C as the adjacent cell information. Furthermore, information tables 1024B store the information of the cell managed by integrative radio base station 102B as its cell information and the information of the cell managed by integrative radio base stations 102A and 102C as the adjacent cell information. Still furthermore, information table 1024C stores the information of the cell managed by integrative radio base station 102C as its cell information and the information of the cell managed by integrative radio base stations 102A and 102B as the adjacent cell information.

As illustrated in Fig. 7, integrative radio base station 102A causes information control unit 1025 to perform a polling process every predetermined period to determine whether integrative radio base stations 102B and 102C corresponding to the adjacent cell information stored in information table 1024A exist to verify the effectiveness of information table 1024A. At this point, the polling process, to some extent, needs to be performed for a longer period of time.

If a response signal is not sent back from integrative radio base stations 102B or 102C in response to the polling, information control unit 1025 of integrative radio base station 102A deletes corresponding adjacent cell information from information table 1024A. If response signals are sent back from integrative radio base stations 102B and 102C in response to the polling, information control unit 1025 does not perform any operation.

Mobile integrative-radio base-station 102 may be installed at such a location where communication traffic may be temporarily increased such as, for example, a sports ground or a motor racing circuit. According to the present invention, even if integrative radio base station 102 is temporarily installed or removed to change the configuration of the RAN and the adjacent cell information, the contents of the information table included in the installed integrative radio base station 102 can be readily renewed.

Steps for changing station data held by integrative radio base station 102 are described below with reference to Fig. 8.

As a way of change station data (parameter) that is held by integrative radio base station 102, there is available a method for a manager to directly log on to integrative radio base station 102. As another way, there is available a method for station data management device 104 to change the station data of integrative radio base station 102 that is to be changed to reflect the changed result in corresponding integrative radio base station 102.

Fig. 8 is a sequence chart illustrating steps for changing station data by the integrative radio base station illustrated in Fig. 2. Fig. 8 illustrates steps for changing station data by directly logging on to any integrative radio base station 102.

As illustrated in Fig. 8, if the station data (parameter) of integrative radio base station 102 is changed, information control unit 1025 transmits a station-data setting change notification including the contents of the change to station data management device 104.

When station data management device 104 receives the station-data setting change notification, information notification unit 1043 searches integrative radio base station 102 that is holding, as the adjacent cell information, the cell information of integrative radio base station 102 whose station data is changed. Then, information notification unit 1043 notifies the corresponding integrative radio base station 102 of the station-data setting change.

The information table included in integrative radio base station 102 is described below with reference to Fig. 9.

Fig. 9 is a schematic diagram illustrating one example of the information table of the integrative radio base station illustrated in Fig. 2.

As described above, research shows that a next generation mobile communication system uses an integrative radio base station to integrate the functions of a radio base station and a radio control device of the third generation mobile communication system into one function. In the third generation mobile communication system, signals between radio control devices are specified. On the other hand, in a next generation mobile communication system, research shows that integrative radio base stations 102 transmit/receive information to/from each other to realize the handover process of mobile terminal 101 as illustrated in Fig. 2. Mobile terminal 101 reports information identifying a cell and reception quality for each cell measured by mobile terminal 101 and integrative radio base station 102 determines whether handover is required based on the report of the measurement result and specifies the cell of destination of mobile terminal 101.

As illustrated in Fig. 9, information table 1024 included in integrative radio base station 102 holds the adjacent cell information in which cell identification information used for indicating the cell of destination of mobile terminal 101 is associated with the destination address of integrative radio base station 102 that manages the cell.

### (Second Embodiment)

A second embodiment of the mobile communication system of the present invention is described below with reference to the drawing.

The mobile communication system of the second embodiment differs from that of the first embodiment in that information representing the positional relationship of each cell is registered in data base unit 1041 of station data management device 104 to enable station data management device 104 to capture the adjacent cell information required for each cell. The configuration of the integrative radio base station and the station data management device is the same as that of the first embodiment, so that description thereof is omitted.

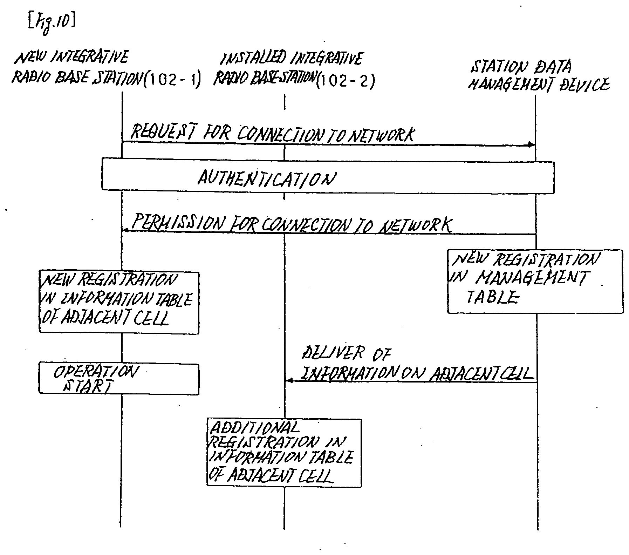

Fig. 10 is a sequence chart illustrating steps for notification of the adjacent cell information by the integrative radio base station according to the second embodiment.

The following is a description of the case where integrative radio base station 102-1 (or, a new integrative radio base station) is added to a RAN that includes installed integrative radio base station 102-2 and station data management device 104.

As illustrated in Fig. 10, integrative radio base station 102-1 (a new integrative radio base station) added to the RAN first causes information control unit 1025 to transmit a request for connection to the RAN (or, a request for connection to a network) to station data management device 104. At this point, information control unit 1025 also transmits a pre-registered medium access control (MAC) address and IP address of the integrative radio base station to station data management device 104. If the IP address is allocated to each integrative radio base station 102 by a known dynamic host configuration protocol (DHCP), the IP address does not need to be pre-registered in new integrative radio base station 102.

Station data management device 104 which has received the request for connection to a network from new integrative radio base station 102-1 causes authentication unit 1042 to ascertain whether new integrative radio base station 102-1 is a normal device in order to determine whether new integrative radio base station 102-1 is permitted to be connected to the RAN.

If station data management device 104 determines that new integrative radio base station 102-1 is a normal device and permits it to be connected to the RAN, station data management device 104 extracts the adjacent cell information required by new integrative radio base station 102-1 based on information on the positional relationship of each cell registered in data base unit 1041 and transmits station data including a common parameter, an individual parameter and the extracted adjacent cell information to new integrative radio base station 102-1.

Station data management device 104 transmits the station data to new integrative radio base station 102-1 which has requested connection to the RAN, and then registers the station data in data base unit 1041 together with the station data associated with added new integrative radio base station 102-1. Station data management device 104 delivers the cell information of new integrative radio base station 102-1 to adjacent integrative radio base station 102-2. Installed integrative radio base station 102-2 additionally registers the received cell information in information table 1024 as the adjacent cell information.

On the other hand, new integrative radio base station 102-1 which has received the common parameter, the individual parameter and the extracted adjacent cell information, registers these pieces of information in information table 1024 and starts operation.

Although the above is a description of an example in which new integrative radio base station 102-1 is added, installed integrative radio base station 102-2 in the RAN may also be notified of changed adjacent cell information by station data management device 104 when any installed integrative radio base station 102-2 is removed from the RAN.

Station data management device 104 may notify each integrative radio base station 102 of various parameters at the time of addition or decrease of integrative radio base station 102. For example, if new integrative radio base station 102-1 is added, station data management device 104 may request integrative radio base station 102-2 adjacent to new integrative radio base station 102-1 to reduce the maximum transmission power. If any installed integrative radio base station 102-2 is removed from the RAN, station data management device 104 may request installed integrative radio base station 102-2 adjacent to installed integrative radio base station 102-2 to increase the maximum transmission power.

When station data management device 104 thus transmits the adjacent cell information including various parameters, station data management device 104 notifies installed integrative radio base station 102-2 that is holding the corresponding adjacent cell information of the changed contents of the parameter to reflect the changed contents in the station data held by the installed integrative radio base station 102-2.

As described above, according to the mobile communication system of the present invention, station data management device 104 is provided on the RAN formed of integrative radio base stations 102 that integrates the functions of a radio base station and a radio control device used in the third generation mobile communication system to allow supplying station data required for the operation to integrative radio base station 102 to be added. Integrative radio base station 102 can acquire the cell information required for the handover process of mobile terminal 101 from station data management device 104, as required, to eliminate the need for work for registering the adjacent cell information in each integrative radio base station 102. Even if integrative radio base station 102 is added or if installed integrative radio base station 102 is removed from the network or if the station data of any integrative radio base station 102 is changed, each integrative radio base station will be notified of the changed contents as needed by station data management device 104, thus eliminating the need for changing the station data of other integrative radio base stations 102 holding the cell information of integrative radio base station 102 whose station data is changed as adjacent cell information.

This therefore substantially reduces the load for registering and renewing station data in integrative radio base stations 102 that forms the RAN to facilitate management of the station data.

Although the information management method of the present invention is described above with the mobile communication system taken as an example, the information management method of the present invention is applicable to IEEE 802.11 series, that is to say, a radio network formed using an integrative access point that integrates a radio control function in an access point in wireless LAN system.

In a current wireless LAN system, each access point does not hold information on access points adjacent thereto. However, because the function of the wireless LAN system is sophisticated, each access point may have more parameters in the future. In that case, a wireless LAN system will be formed using a plurality of integrative access points in which main function unit 1021 of integrative radio base station 102 illustrated in Fig. 2 will be replaced with the function of an access point to achieve the same effect as described above.

## Claims

1. A communication system comprising:
a plurality of integrative radio base stations (102), each of which being adapted to hold station data including information on cells managed by the station (102) and information on cells adjacent thereto, determine whether the station (102) holds information on an adjacent cell that is a destination of a mobile terminal (101) and information that is required at the time of handover of the mobile terminal (101), acquire the information on the cell if the station (102) does not hold the information on the cell, and relay communication between the mobile terminal (101) and a core network (103); and
a station data management device (104) which is adapted to manage station data for each integrative radio base station (102), perform an authentication process in accordance with a request from the integrative radio base station (102), provide station data required for a processing operation by the integrative radio base station (102) if the integrative radio base station (102) which has made the request for authentication is permitted to be connected to a network, and send back the information on the cell to the integrative radio base station (102) that is the source of the request if the integrative radio base station (102) requests the station data management device (104) to send the information on the cell,
wherein said integrative radio base station (102) is adapted to request said station data management device (104) to carry out authentication when connecting to a radio access network (RAN),
wherein said integrative radio base station (102) is adapted to determine whether handover of the mobile terminal (101) is required based on a received report of a measurement result and to specify a cell of destination of the mobile terminal (101), and
wherein, if said integrative radio base station (102) does not hold information on the specified cell, said integrative radio base station (102) is adapted to request the station data management device (104) to send only the information on the specified cell.

2. The communication system according to claim 1, wherein
the integrative radio base station (102) includes:
a main function unit (1021) which is adapted to relay communication between the mobile terminal (101) and the core network (102);
an information table (1024) which is adapted to hold station data including the information on a cell managed by the integrative radio base station (102) and the information on a cell previously used and adjacent to the integrative radio base station (102);
an authentication request unit (1023) which is adapted to request the station data management device (104) to perform authentication when adding an integrative radio base station (102);
a cell information notification unit (1022) for notifying the station data management device (104) of information for identifying the cell at the time of acquiring the information on the cell from the station data management device (104);
an information control unit (1025) which is adapted to determine whether the information table (1024) holds the information on an adjacent cell that is the destination of the mobile terminal (101) at the time that handover of the mobile terminal (101) is being processed and acquire the information on the corresponding cell if the information table (1024) does not hold the information on the cell; and
a communication interface unit (1026) which is adapted to transmit/receive information to/from an adjacent integrative radio base station (102) at the time that handover is being processed.

3. The communication system according to claims 1 or 2, wherein
the station data management device (104) includes:
a data base unit (1041) for holding station data for each of the integrative radio base stations (102);
an authentication unit (1042) for performing an authentication process in accordance with a request from the integrative radio base station (102);
an information notification unit (1043) for providing station data required for the operation of the integrative radio base station (102) if the integrative radio base station (102) which has made a request for authentication is permitted to be connected to a network, and sending back the information on a cell that has been requested from the integrative radio base station (102) to the integrative radio base station (102) that is the source of the request; and
a cell information recording unit (1044) for recording information on an adjacent cell used for each of the integrative radio base stations (102).

4. The communication system according to claim 3, wherein
information representing a positional relationship of the cell is registered in the data base unit (1041).

5. An information management method for managing station data in a communication system including integrative radio base stations (102) for relaying communication between a mobile terminal (101) and a core network (103) and a station data management device (104) for managing station data for each integrative radio base station (102), the method comprising:
causing the integrative radio base station (102)
to hold station data including information on a cell managed by itself and information on cells adjacent thereto, to determine whether the information on an adjacent cell that is a destination of a mobile terminal (101) and information that is required at the time of the handover process of the mobile terminal (101) is held therein at the time of adding the integrative radio base station (102), and to acquire the information on the cell from the station data management device (104) if the information on the cell is not held; and
causing the station data management device (104)
to perform an authentication process in accordance with a request from the integrative radio base station (102), to provide station data required for an operation of the integrative radio base station (102) if the integrative radio base station (102) which has made a request for the authentication is permitted to be connected to a network, and to send back the information on the cell to the integrative radio base station (102) that is the source of the request if the integrative radio base station (102) requests the station data management device (104) to send the information on the cell,
wherein said integrative radio base station (102) requests said station data management device (104) to carry out authentication when connecting to a radio access network (RAN),
wherein said integrative radio base station (102) determines whether handover of the mobile terminal (101) is required based on a received report of a measurement result and specifies a cell of destination of the mobile terminal (101), and
wherein, if said integrative radio base station (102) does not hold information on the specified cell, said integrative radio base station (102) requests the station data management device (104) to send only the information on the specified cell.

6. The information management method according to claim 5, wherein
the station data management device (104) holds information representing a positional relationship between the cells.

## Patentansprüche

1. Kommunikationssystem, das Folgendes umfasst:
eine Anzahl an integrativen Funkbasisstationen (102), von denen jede zum Speichern von Stationsdaten, die Informationen über Zellen, die durch die Station (102) verwaltet werden, und Informationen über daran angrenzende Zellen einschließen, Bestimmen, ob die Station (102) Informationen über eine angrenzende Zelle, die ein Ziel eines mobilen Endgeräts (101) ist, und Informationen, die zum Zeitpunkt eines Handover des mobilen Endgeräts (101) erforderlich sind, speichert, Erlangen der Informationen über die Zelle, wenn die Station (102) die Informationen über die Zellen nicht besitzt, und Weiterleiten von Kommunikation zwischen dem mobilen Endgerät (101) und einem Kernnetz (103) angepasst ist; und
eine Stationsdatenverwaltungsvorrichtung (104), die zum Verwalten von Stationsdaten für jede integrative Funkbasisstation (102), Durchführen eines Authentifizierungsprozesses in Übereinstimmung mit einer Anfrage von der integrativen Funkbasisstation (102), Bereitstellen von Stationsdaten, die für einen Verarbeitungsvorgang durch die integrative Funkbasisstation (102) erforderlich sind, wenn die integrative Funkbasisstation (102), welche die Anfrage nach Authentifizierung gemacht hat, mit einem Netzwerk verbunden werden darf, und Zurücksenden der Informationen über die Zelle zu der integrativen Funkbasisstation (102), welche die Quelle der Anfrage ist, wenn die integrative Funkbasisstation (102) die Stationsdatenverwaltungsvorrichtung (104) zum Senden der Informationen über die Zelle auffordert, angepasst ist,
wobei die integrative Funkbasisstation (102) zum Auffordern der Stationsdatenverwaltungsvorrichtung (104) zum Ausführen von Authentifizierung bei Verbindung mit einem Funkzugangsnetz (RAN) angepasst ist,
wobei die integrative Funkbasisstation (102) zum Bestimmen, ob ein Handover des mobilen Endgeräts (101) erforderlich ist, basierend auf einem empfangenen Bericht eines Messergebnisses, und zum Spezifizieren einer Zielzelle des mobilen Endgeräts (101) angepasst ist und
wobei, wenn die integrative Funkbasisstation (102) keine Informationen über die spezifizierte Zelle besitzt, die integrative Funkbasisstation (102) zum Auffordern der Stationsdatenverwaltungsvorrichtung (104) zum Senden nur der Informationen über die spezifizierte Zelle angepasst ist.

2. Kommunikationssystem gemäß Anspruch 1, wobei
die integrative Funkbasisstation (102) einschließt:
eine Hauptfunktionseinheit (1021), die zum Weiterleiten von Kommunikation zwischen dem mobilen Endgerät (101) und dem Kernnetz (102) angepasst ist;
eine Informationstabelle (1024), die zum Speichern von Stationsdaten, welche die Informationen über eine Zelle, die durch die integrative Funkbasisstation (102) verwaltet wird, und die Informationen über eine Zelle, die zuvor verwendet wurde und an die integrative Funkbasisstation (102) angrenzt, einschließen, angepasst ist;
eine Authentifizierungsanfrageeinheit (1023), die zum Auffordern der Stationsdatenverwaltungsvorrichtung (104) zum Durchführen von Authentifizierung beim Zufügen einer integrativen Funkbasisstation (102) angepasst ist;
eine Zellinformationsbenachrichtigungseinheit (1022) zum Benachrichtigen der Stationsdatenverwaltungsvorrichtung (104) über Informationen zum Identifizieren der Zelle zu dem Zeitpunkt des Erlangens der Informationen über die Zelle von der Stationsdatenverwaltungsvorrichtung (104);
eine Informationssteuereinheit (1025), die zum Bestimmen, ob die Informationstabelle (1024) die Informationen über eine angrenzende Zelle, die das Ziel des mobilen Endgeräts (101) zu dem Zeitpunkt ist, an dem ein Handover des mobilen Endgeräts (101) verarbeitet wird, besitzt, und Erlangen der Informationen über die entsprechende Zelle, wenn die Informationstabelle (1024) die Informationen über die Zelle nicht besitzt, angepasst ist; und
eine Kommunikationsschnittstelleneinheit (1026), die zum Senden/Empfangen von Informationen an/von einer angrenzenden integrativen Funkbasisstation (102) zu dem Zeitpunkt, an dem ein Handover verarbeitet wird, angepasst ist.

3. Kommunikationssystem gemäß Anspruch 1 oder 2, wobei die Stationsdatenverwaltungsvorrichtung (104) einschließt:
eine Datenbankeinheit (1041) zum Speichern von Stationsdaten für jede der integrativen Funkbasisstationen (102);
eine Authentifizierungseinheit (1042) zum Durchführen eines Authentifizierungsvorgangs in Übereinstimmung mit einer Anfrage von der integrativen Funkbasisstation (102);
eine Informationsbenachrichtigungseinheit (1043) zum Bereitstellen von Stationsdaten, die für den Betrieb der integrativen Funkbasisstation (102) erforderlich sind, wenn die integrative Funkbasisstation (102), die eine Anfrage nach Authentifizierung gemacht hat, mit einem Netzwerk verbunden werden darf, und Zurücksenden der Informationen über eine Zelle, die von der integrativen Funkbasisstation (102) angefragt worden ist, an die integrative Funkbasisstation (102), welche die Quelle der Anfrage ist; und
eine Zellinformationsaufzeichnungseinheit (1044) zum Aufzeichnen von Informationen über eine angrenzende Zelle, die für jede der integrativen Funkbasisstationen (102) verwendet werden.

4. Kommunikationssystem gemäß Anspruch 3, wobei
Informationen, die eine Positionsbeziehung der Zelle darstellen, in der Datenbankeinheit (1041) registriert sind.

5. Informationsverwaltungsverfahren zum Verwalten von Stationsdaten in einem Kommunikationssystem, das integrative Funkbasisstationen (102) zum Weiterleiten von Kommunikation zwischen einem mobilen Endgerät (101) und einem Kernnetz (103) und eine Stationsdatenverwaltungsvorrichtung (104) zum Verwalten von Stationsdaten für jede integrative Funkbasisstation (102) einschließt, wobei das Verfahren umfasst:
Veranlassen der integrativen Funkbasisstation (102)
zum Speichern von Stationsdaten, die Informationen über eine Zelle, die durch sich selbst verwaltet wird, und Informationen über daran angrenzende Zellen einschließen, zum Bestimmen, ob die Informationen über eine angrenzende Zelle, die ein Ziel eines mobilen Endgeräts (101) ist, und Informationen, die zu dem Zeitpunkt des Handover-Vorgangs des mobilen Endgeräts (101) erforderlich sind, darin gespeichert sind zu dem Zeitpunkt des Hinzufügens der integrativen Funkbasisstation (102), und zum Erlangen der Informationen über die Zelle von der Stationsdatenverwaltungsvorrichtung (104), wenn die Informationen über die Zelle nicht gespeichert sind; und
Veranlassen der Stationsdatenverwaltungsvorrichtung (104)
zum Ausführen eines Authentifizierungsvorgangs in Übereinstimmung mit einer Anfrage von der integrativen Funkbasisstation (102), zum Bereitstellen von Stationsdaten, die für einen Betrieb der integrativen Funkbasisstation (102) erforderlich sind, wenn die integrative Funkbasisstation (102), die eine Anfrage nach der Authentifizierung gemacht hat, mit einem Netz verbunden werden darf, und zum Zurücksenden der Informationen über die Zelle an die integrative Funkbasisstation (102), welche die Quelle der Anfrage ist, wenn die integrative Funkbasisstation (102) die Stationsdatenverwaltungsvorrichtung (104) zum Senden der Informationen über die Zelle auffordert,
wobei die integrative Funkbasisstation (102) die Stationsdatenverwaltungsvorrichtung (104) zum Ausführen von Authentifizierung beim Verbinden mit einem Funkzugangsnetz (RAN) auffordert,
wobei die integrative Funkbasisstation (102) bestimmt, ob ein Handover des mobilen Endgeräts (101) erforderlich ist, basierend auf einem empfangenen Bericht über ein Messergebnis, und eine Zielzelle des mobilen Endgeräts (101) spezifiziert und
wobei, wenn die integrative Funkbasisstation (102) keine Informationen über die spezifizierte Zelle besitzt, die integrative Funkbasisstation (102) die Stationsdatenverwaltungsvorrichtung (104) zum Senden nur der Informationen über die spezifizierte Zelle auffordert.

6. Informationsverwaltungsverfahren gemäß Anspruch 5, wobei
die Stationsdatenverwaltungsvorrichtung (104) Informationen speichert, die eine Positionsbeziehung zwischen den Zellen darstellen.

## Revendications

1. Système de communication comprenant :
une pluralité de stations de base radio intégratives (102), dont chacune est adaptée pour détenir des données de station incluant des informations sur des cellules gérées par la station (102) et des informations sur des cellules adjacentes à celle-ci, déterminer si la station (102) détient des informations sur une cellule adjacente qui est une destination d'un terminal mobile (101) et des informations qui sont requises au moment d'un transfert intercellulaire du terminal mobile (101), acquérir les informations sur la cellule si la station (102) ne détient pas les informations sur la cellule, et relayer une communication entre le terminal mobile (101) et un réseau central (103) ; et
un dispositif de gestion de données de station (104) qui est adapté pour gérer des données de station pour chaque station de base radio intégrative (102), réaliser un processus d'authentification selon une demande provenant de la station de base radio intégrative (102), fournir des données de station requises pour une opération de traitement par la station de base radio intégrative (102) si la station de base radio intégrative (102) qui a fait la demande d'authentification est autorisée à se connecter à un réseau, et renvoyer les informations sur la cellule à la station de base radio intégrative (102) qui a la source de la demande si la station de base radio intégrative (102) demande au dispositif de gestion de données de station (104) d'envoyer les informations sur la cellule,
dans lequel ladite station de base radio intégrative (102) est adaptée pour demander audit dispositif de gestion de données de station (104) de réaliser une authentification lors de la connexion à un réseau d'accès radio (RAN),
dans lequel ladite station de base radio intégrative (102) est adaptée pour déterminer si un transfert intercellulaire du terminal mobile (101) est requis d'après un rapport reçu d'un résultat de mesure et pour spécifier une cellule de destination du terminal mobile (101), et
dans lequel, si ladite station de base radio intégrative (102) ne détient pas d'informations sur la cellule spécifiée, ladite station de base radio intégrative (102) est adaptée pour demander au dispositif de gestion de données de station (104) d'envoyer uniquement des informations sur la cellule spécifiée.

2. Système de communication selon la revendication 1, dans lequel
la station de base radio intégrative (102) comporte :
une unité de fonction principale (1021) qui est adaptée pour relayer une communication entre le terminal mobile (101) et le réseau central (102) ;
une table d'informations (1024) qui est adaptée pour détenir des données de station incluant les informations sur une cellule gérée par la station de base radio intégrative (102) et les informations sur une cellule précédemment utilisée et adjacente à la station de base radio intégrative (102) ;
une unité de demande d'authentification (1023) qui est adaptée pour demander au dispositif de gestion de données de station (104) de réaliser une authentification lors de l'ajout d'une station de base radio intégrative (102) ;
une unité de notification d'informations de cellule (1022) pour notifier au dispositif de gestion de données de station (104) des informations pour identifier la cellule au moment de l'acquisition des informations sur la cellule depuis le dispositif de gestion de données de station (104) ;
une unité de commande d'informations (1025) qui est adaptée pour déterminer si la table d'informations (1024) détient les informations sur une cellule adjacente qui est la destination du terminal mobile (101) au moment où un transfert intercellulaire du terminal mobile (101) est traité et acquérir les informations sur la cellule correspondante si la table d'informations (1024) ne détient pas les informations sur la cellule ; et
une unité d'interface de communication (1026) qui est adaptée pour transmettre/recevoir des informations à/en provenance d'une station de base radio intégrative (102) adjacente au moment où un transfert intercellulaire est traité.

3. Système de communication selon les revendications 1 ou 2, dans lequel
le dispositif de gestion de données de station (104) inclut :
une unité de base de données (1041) pour détenir des données de station pour chacune des stations de base radio intégratives (102) ;
une unité d'authentification (1042) pour réaliser un processus d'authentification selon une demande provenant de la station de base radio intégrative (102) ;
une unité de notification d'informations (1043) pour fournir des données de station requises pour le fonctionnement de la station de base radio intégrative (102) si la station de base radio intégrative (102) qui a fait une demande d'authentification est autorisée à se connecter à un réseau, et renvoyer les informations sur une cellule qui ont été demandées de la station de base radio intégrative (102) à la station de base radio intégrative (102) qui est la source de la demande ; et
une unité d'enregistrement d'informations de cellule (1044) pour enregistrer des informations sur une cellule adjacente utilisée pour chacune des stations de base radio intégratives (102).

4. Système de communication selon la revendication 3, dans lequel
des informations représentant une relation de position de la cellule sont enregistrées dans l'unité de base de données (1041).

5. Procédé de gestion d'informations pour gérer des données de station dans un système de communication incluant des stations de base radio intégratives (102) pour relayer une communication entre un terminal mobile (101) et un réseau central (103) et un dispositif de gestion de données de station (104) pour gérer des données de station pour chaque station de base radio intégrative (102), le procédé comprenant :
le fait d'amener la station de base radio intégrative (102)
à détenir des données de station incluant des informations sur une cellule gérées par elle-même et des informations sur des cellules adjacentes à celle-ci, à déterminer si les informations sur une cellule adjacente qui est une destination d'un terminal mobile (101) et des informations qui sont requises au moment du processus de transfert intercellulaire du terminal mobile (101) sont détenues à l'intérieur au moment de l'ajout de la station de base radio intégrative (102), et à acquérir les informations sur la cellule depuis le dispositif de gestion de données de station (104) si les informations sur la cellule ne sont pas détenues ; et
le fait d'amener le dispositif de gestion de données de station (104)
à réaliser un processus d'authentification selon une demande provenant de la station de base radio intégrative (102), à fournir des données de station requises pour un fonctionnement de la station de base radio intégrative (102) si la station de base radio intégrative (102) qui a fait une demande d'authentification est autorisée à se connecter à un réseau, et à renvoyer les informations sur la cellule à la station de base radio intégrative (102) qui est la source de la demande si la station de base radio intégrative (102) demande au dispositif de gestion de données de station (104) d'envoyer les informations sur la cellule,
dans lequel ladite station de base radio intégrative (102) demande audit dispositif de gestion de données de station (104) de réaliser une authentification lors de la connexion à un réseau d'accès radio (RAN),
dans lequel ladite station de base radio intégrative (102) détermine si un transfert intercellulaire du terminal mobile (101) est requis d'après un rapport reçu d'un résultat de mesure et spécifie une cellule de destination du terminal mobile (101), et
dans lequel, si ladite station de base radio intégrative (102) ne détient pas d'informations sur la cellule spécifiée, ladite station de base radio intégrative (102) demande au dispositif de gestion de données de station (104) d'envoyer uniquement des informations sur la cellule spécifiée.

6. Procédé de gestion d'informations selon la revendication 5, dans lequel
le dispositif de gestion de données de station (104) détient des informations représentant une relation de position entre les cellules.
